# FASCICULE DE BREVET EUROPEEN

(11) **EP 2 257 850 B1**
(45) Date de publication et mention de la délivrance du brevet: **02.10.2013**
(21) Numéro de dépôt: 09727883.2
(22) Date de dépôt: 18.03.2009
(51) Int. Cl.: G02B 27/01, C09K 11/00

(54) **DISPOSITIF DE VISUALISATION TETE HAUTE**
HEAD-UP-DISPLAY-VORRICHTUNG
HEAD-UP DISPLAY DEVICE

(30) Priorité: 19.03.2008 FR 0851772
(43) Date de publication de la demande: 08.12.2010
(73) Titulaire: Saint-Gobain Glass France, 92400 Courbevoie (FR)
(72) Inventeur: LABROT, Michael, 52072 Aachen (DE); JOUSSE, Didier, F-95150 Taverny (FR)
(74) Mandataire: Lucas, Francois
(86) Numéro de dépôt international: PCT/FR2009/050449
(87) Numéro de publication internationale: WO 2009/122094

(56) Documents cités:
- EP-A- 1 793 261
- DE-A1- 10 350 529
- FR-A- 2 578 797
- US-A1- 2006 171 007
- US-B2- 6 979 499

## Description

La présente invention se rapporte au domaine des systèmes de visualisation projetés sur des supports au moins en partie transparents du type pare-brise.

Tout particulièrement, la présente invention se rapporte au domaine des systèmes de visualisation tête haute, appelé HUD ou Head Up Display dans la technique. De tels systèmes sont utiles notamment dans les cockpits d'avion, les trains et plus récemment dans les véhicules automobiles des particuliers (voitures, camions, etc.).

Dans de tels systèmes, le vitrage est en général constitué d'une structure en sandwich, comprenant le plus simplement deux feuilles de verre. Les feuilles de verre sont reliées entre elles par un feuillet intercalaire thermoformable comprenant ou constitué le plus souvent de polyvinylbutyral (PVB).

Des systèmes de visualisation tête haute affichant des informations projetées sur un vitrage qui se réfléchissent vers le conducteur ou l'observateur, sont déjà connus. Ces systèmes permettent notamment de fournir au conducteur du véhicule des informations pertinentes, sans que celui-ci éloigne son regard du champ de vision en avant du véhicule. De tels dispositifs, outre l'agrément qu'ils apportent, confèrent donc également un surcroît de sécurité. Le conducteur perçoit alors une image virtuelle qui se situe à une certaine distance derrière le pare-brise.

De la manière la plus classiquement décrite jusqu'à présent, on obtient une telle image supplémentaire sur un pare-brise en projetant une information sur un pare-brise ayant une structure feuilletée, c'est à dire formée de deux feuilles de verre et d'un intercalaire en matière plastique. Cependant le conducteur observe alors une image double: une première image réfléchie par la surface du pare-brise orientée vers l'intérieur de l'habitable et une seconde image par réflexion de la surface extérieure du pare-brise, ces deux images étant légèrement décalées l'une par rapport à l'autre. Ce décalage peut perturber la vision de l'information. Pour pallier ce problème, on peut citer comme une solution proposée le brevet US 5,013,134 qui décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour réaliser ce vitrage feuilleté en forme de coin on utilise un feuillet intercalaire dont l'épaisseur décroît du bord supérieur du vitrage au bord inférieur. Cependant cette solution, si elle est satisfaisante en terme de suppression de la double image, présente néanmoins des inconvénients. L'angle du PVB en coin doit être parfaitement ajusté à la configuration spécifique. Il est important aussi que le profil du PVB soit très régulier et ne présente pas de variations d'épaisseur, car ceux-ci se transmettent au cours de l'assemblage sur le pare-brise et conduisent à des variations locales d'angle. Ainsi le moindre défaut d'épaisseur du PVB entraîne une perte irréparable de la qualité optique de l'image restituée sur le pare-brise. En outre, l'image obtenue par ces dispositifs HUD est une image virtuelle obtenue par réflexion du faisceau incident sur le pare-brise et n'est de ce fait qu'observable par le conducteur du véhicule.

Une autre solution, déjà décrite dans le brevet US 6,979,499 B2 de PPG Industries Ohio, consiste à envoyer un faisceau incident, de longueur d'onde appropriée, sur des luminophores susceptibles de répondre à une telle excitation par l'émission d'une radiation lumineuse dans le domaine de la lumière visible. De cette façon, une image réelle et non plus virtuelle, est formée directement sur le pare-brise. Cette image est donc visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde peut être dans le domaine de l'ultraviolet (down conversion) ou de l'IR (up conversion). Les luminophores, sous cette radiations incidente, réémettent un rayonnement dans le domaine du visible. Une telle construction permet selon ce document de restituer directement sur le pare brise ou le vitrage une image de n'importe quel objet. Selon cette divulgation, des matériaux luminophores sont déposés sur l'ensemble d'une surface principale d'un des feuillets constituant le vitrage feuilleté (PVB ou verre) sous la forme d'une couche continue comprenant plusieurs types de luminophores. L'image recherchée est obtenue par l'excitation sélective d'une aire déterminée de la couche de luminophore. La localisation de l'image et sa forme sont obtenues au moyen d'une source d'excitation pilotée et modulée par des moyens extérieurs. le document DE10350529 décrit également un pare-brise feuilleté comportant des matériaux luminophores.

On mesure bien les difficultés pratiques d'un tel système, qui exige pour son fonctionnement idéal des moyens coûteux et sophistiqués de mise en oeuvre :
- d'une part pour la création et le rendu de l'image sur le vitrage, nécessitant l'obtention d'un vitrage incorporant sur une grande partie de sa surface une couche de luminophores dont la nature, la concentration et le positionnement doivent être judicieusement choisis et soigneusement contrôlés,
- d'autre part pour le bon positionnement et la forme recherchée de ladite image sur le pare-brise, par la mise en oeuvre d'un dispositif complexe permettant tout à la fois de générer, de moduler et de diriger le rayonnement d'excitation,
De plus le système décrit dans US 6,979,499 B2 pose des problèmes d'encombrement et de positionnement dans le tableau de bord du véhicule.

En outre, de tels dispositifs HUD, incorporant des luminophores au niveau du pare-brise, se caractérisent, notamment par rapport aux systèmes HUD classique par réflexion, par une faible luminance, car la concentration des luminophores est limitée par le maintien, au niveau du pare-brise, d'une transmission lumineuse suffisante et d'un niveau de flou suffisamment faible pour ne pas dégrader de manière inacceptable la vision du conducteur.

En particulier, il apparaît que l'intensité lumineuse de tels dispositifs apparaît encore très insuffisante lorsque la luminosité extérieure est forte, et d'une manière générale en vision diurne. Pour pallier à ce problème, il est bien sur possible d'utiliser des sources excitatrices générant une lumière concentrée, du type laser UV, mais de telles sources posent alors des problèmes de dangerosité et de confinement à l'extérieur comme à l'intérieur du véhicule.

La présente invention se propose de fournir un dispositif de visualisation tête haute HUD permettant, à moindre coût, de répondre à l'ensemble des problèmes précédemment évoqués.

Plus précisément, la présente invention se rapporte à un pare-brise feuilleté incorporant un dispositif de visualisation tête haute, comprenant un assemblage de deux feuilles transparentes de verre inorganique ou d'une matière organique résistante aux chocs du type polycarbonate PC, reliées entre elles par un intercalaire d'une matière thermoformable ou par un feuillet multicouche intégrant un tel intercalaire, selon l'ordre suivant :
- une première feuille extérieure, dont une face est tournée vers l'extérieur du véhicule et l'autre face est au contact de l'intercalaire ou du feuillet multicouche, ladite autre face étant par ailleurs revêtue sur au moins un de ses bords d'une couche d'émail noir servant de décoration ou de protection des couches adhésives utilisées pour le masquage des bandes collectrices de réseaux chauffants,
- une deuxième feuille intérieure, dont une face est au contact de l'intercalaire ou du feuillet multicouche et l'autre face est tournée vers l'intérieur du véhicule.

Ledit pare brise étant caractérisé :
- en ce qu'il comporte au moins une couche d'au moins un matériau luminophore choisi pour répondre à une onde incidente lumineuse incidente excitatrice dans le domaine de l'ultraviolet ou de l'IR en réémettant un rayonnement lumineux dans le domaine du visible, ladite couche étant positionnée sur le pare-brise, suivant l'angle de vision du conducteur, au niveau de ladite couche d'émail noir,
- en ce qu'il comporte au moins une couche, déposée sous la forme d'un pictogramme, d'au moins un matériau luminophore choisi pour répondre à une onde incidente lumineuse incidente excitatrice dans le domaine de l'ultraviolet ou de l'IR en réémettant un rayonnement lumineux dans le domaine du visible, ledit pictogramme étant positionné sur le pare-brise, suivant l'angle de vision du conducteur, au niveau de ladite couche d'émail noir,
- en ce que ladite couche de luminophore est disposée sur la face de l'intercalaire ou du feuillet thermoplastique tournée vers l'habitacle du véhicule, sur la face interne de la deuxième feuille intérieure ou sur la face externe de la deuxième feuille intérieure, par référence à l'habitacle du véhicule.

De préférence, ladite couche de luminophore est disposée sur la face de l'intercalaire ou du feuillet thermoplastique tournée vers l'habitacle du véhicule. La matière thermoformable constituant ledit intercalaire peut être choisie dans le groupe des PVB, des PVC plastifiés, du polyuréthane PU ou des éthylènes vinyle acétate EVA.

Par exemple, les feuilles transparentes sont reliées entre elles par un feuillet multicouche intégrant un intercalaire PVB, par exemple un feuillet comprenant une succession de couches PVB/PET/PVB, dans lequel PET est le polyéthylène téréphtalate. Selon un mode possible, une couche d'un matériau antireflet pour la radiation excitatrice peut être utilisée, disposée dans l'assemblage avant la couche de luminophore (10), par exemple sur une des faces de la feuille de verre intérieur.

Alternativement ou en complément, une couche d'un matériau réfléchissant la lumière visible peut être disposée dans l'assemblage avant la couche de luminophore, par exemple sur la face interne de la feuille de verre intérieur.

L'invention se rapporte également à un dispositif de visualisation d'une image sur un pare-brise feuilleté comprenant un pare-brise tel que précédemment décrit et une source génératrice d'un rayonnement dans le domaine de l'UV ou de l'IR, le faisceau du rayonnement étant dirigé vers la ou les zones du vitrage comprenant le ou les pictogrammes.

Dans un tel dispositif de visualisation, la source génératrice de rayonnement UV classique peut être choisie parmi les sources du type diode électroluminescente LED, les sources UV laser, par exemple du type laser à solide, diode laser à semi-conducteurs, lasers à gaz, lasers à colorant, laser à excimère.

Par exemple, la source génératrice de rayonnement UV est constituée par un réseau de LED.

La source peut comprendre avantageusement une lentille configurée et disposée pour concentrer le rayonnement UV incident sur la couche de luminophore ou le pictogramme.

Selon un mode possible, une diode électroluminescente est dédiée à la visualisation sur le pare-brise d'un pictogramme.

Selon un autre mode, au moins deux diodes électroluminescentes sont dédiées à la visualisation sur le pare-brise d'un pictogramme.

Selon un mode avantageux, le dispositif de visualisation selon l'invention peut comprendre des moyens de modulation de la puissance de la source génératrice selon au moins deux configurations : une configuration pour la vision nocturne, dans laquelle la puissance de la source est ajustée pour que la luminance du pictogramme soit typiquement comprise entre environ 30 et environ 100 Cd/m² et une configuration pour la vision diurne, dans laquelle la puissance de la source est ajustée pour que la luminance du pictogramme soit typiquement comprise entre environ 200 et environ 2000 Cd/m².

L'invention et ses avantages seront mieux compris à la lecture des modes de réalisation non limitatifs de l'invention qui suivent, en relation avec les figures jointes.
La figure 1 représente une vue en coupe d'un pare-brise équipé selon l'invention pour permettre une visualisation tête haute de pictogrammes.
La figure 2 illustre plus en détail la succession de feuillets d'un pare-brise selon l'invention.
La figure 3 illustre une vue de face et en élévation du pare-brise selon l'invention.
La figure 4 illustre une vue de face et en élévation d'une autre réalisation d'un pare-brise selon l'invention.

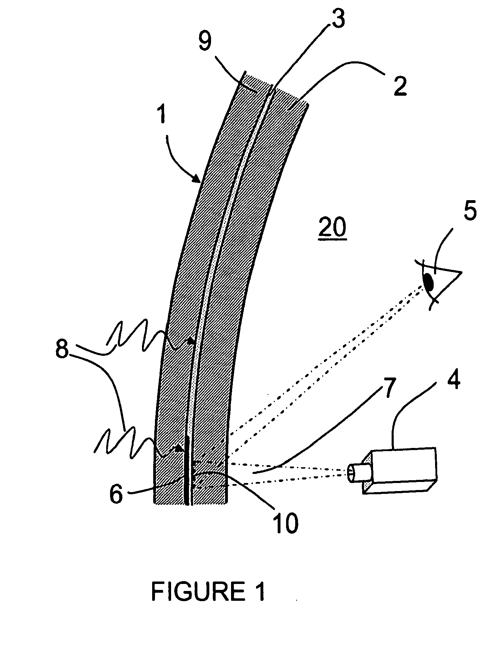

Sur la figure 1, on a schématisé un pare-brise et un dispositif selon l'invention :
Le pare-brise 1 se compose de deux feuilles 2 et 9 en verre. Entre les deux feuilles, est présent un feuillet intercalaire plastique 3 tel que du PVB (polyvinylbutyral), du PVC plastifié, PU ou EVA ou bien encore un feuillet thermoplastique multicouche incorporant par exemple du PET (polyéthylène téréphtalate), dont la succession des couches est par exemple PVB/PET/PVB.

Sur au moins le bord inférieur de la face interne de la première feuille de verre 9 un revêtement noir 6 a été déposé avant le feuilletage, c'est-à-dire avant l'assemblage des différents feuillets.

Le revêtement noir est classiquement un revêtement déjà présent sur les vitrages actuels et ayant par exemple une fonction de décoration ou de protection, notamment de la lumière, des couches adhésives utilisées pour le masquage des bandes collectrices de réseaux chauffants. Quelque soit sa fonction, le revêtement noir est généralement apparent sur toute la partie périphérique du pare-brise. Ce revêtement noir est constitué d'un émail dont l'excellente résistance thermique et mécanique est connue et possédant un fort pouvoir adhésif vis-à-vis du verre : sa composition contient typiquement des frittes de verre susceptibles d'être vitrifiées à haute température, liant ainsi intimement l'émail au support en verre.

Au niveau de la couche d'émail noir 6, on dépose une couche 10 comprenant au moins un luminophore adaptée pour répondre à une source d'excitation extérieur 4. Par le terme « au niveau de la couche d'émail noir », il est entendu au sens de la présente description que la couche de luminophore 10 se superpose à la couche d'émail noir, si on se réfère au champ de vision de l'oeil 5 du conducteur du véhicule. En outre la couche de luminophore est déposée de telle façon qu'elle dessine un signe schématique caractéristique marquant par exemple un renseignement, une information ou un danger imminent, du type pictogramme. Ainsi, contrairement à l'art antérieur, le signal qui apparaît sur le pare-brise est pré-imprimé sur le pare-brise lui-même. Une telle configuration a bien entendu pour avantage sa facilité de réalisation et son moindre coût, seule une portion infime du vitrage devant être équipée de la couche de luminophores, au contraire des réalisations antérieures. Le dépôt de la couche de luminophore pour la représentation d'un pictogramme peut être réalisé selon l'invention selon toute technique connue de dépôt, par exemple mais de façon non limitative par les techniques de sérigraphie, les techniques du type jet d'encre ou encore les techniques du type offset, flexogravure ou encore héliogravure.

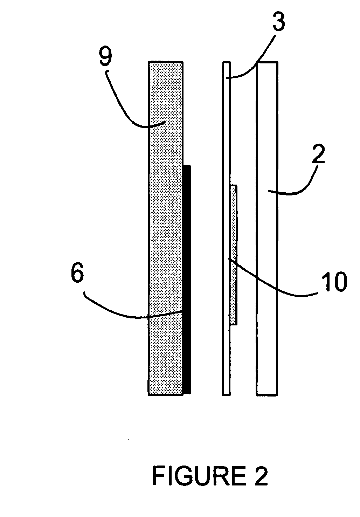

La figure 2 illustre plus en détail la succession de feuillets, en coupe, d'un pare-brise selon l'invention. On voit ainsi la succession des couches feuille de verre extérieure 9 /émail noir 6 / feuillet intercalaire plastique 3/ couche de luminophores (pictogramme imprimé) 10/ feuille de verre intérieure 2. Tel que représenté sur la figure 2, la couche de luminophore 10, sous la forme d'un pictogramme, est déposée sur la face la plus interne du feuillet intercalaire plastique. On ne sortirait cependant pas de l'invention si le dépôt était effectué sur la face interne de la feuille de verre 2 ou de préférence sur la face externe de la feuille de verre 2. Les termes internes et externes utilisés dans la présente description sont utilisés par référence à l'habitacle 20 du véhicule (cf. figure 1). En général, les feuillets intercalaires plastiques ont la propriété d'absorber fortement le rayonnement UV incident. Cependant dans le cas de l'utilisation d'un feuillet intercalaire plastique n'absorbant pas les UV ou dans le cas de l'utilisation d'un rayonnement incident d'IR (up-conversion), on ne sortirait pas du cadre de l'invention si la couche de luminophore était déposée sur la face externe du PVB ou directement sur le fond noir 6.

Selon une réalisation possible, la couche de luminophore 10 peut par exemple être déposé au sein d'un vernis époxy transparent et protecteur, par exemple du type de celui commercialisé par la société MARABU sous la référence MARABU GL 914®, sur l'une ou l'autre des faces de la feuille de verre 2. Selon une autre réalisation, la couche de luminophore peut être rapportée sur le pare-brise, après montage de celui-ci, sous la forme d'un film plastique transparent comprenant ladite couche.

Dans le cas où le dépôt de la couche de luminophore est effectué sur le feuillet thermoplastique PVB (ou autre), les techniques de sérigraphie, les techniques du type jet d'encre ou encore les techniques du type offset, flexogravure ou encore héliogravure peuvent être employées, notamment en fonction de l'épaisseur du feuillet thermoformé.

Tel que représenté sur la figure 1, une source 4 d'un rayonnement électromagnétique est utilisée pour envoyer un rayonnement incident 7 de longueur d'onde appropriée, préférentiellement mais pas exclusivement dans le domaine des ultraviolets. Les luminophores sont choisis pour présenter un fort coefficient d'absorption du rayonnement incident. Ils sont également choisis pour réémettre ensuite un rayonnement dans le domaine visible, c'est-à-dire un rayonnement situé dans le domaine 400-800 m, de préférence avec un fort rendement. Le rayonnement visible issu des luminophores est alors directement observable par l'oeil 5 du conducteur, qui visualise ainsi le pictogramme préimprimé sur le pare-brise sans avoir à quitter la route des yeux. De cette façon, une image peut être directement matérialisée sur un pare-brise feuilleté sans la nécessité d'adapter la structure de celui-ci de façon sensible, ce qui permet une fabrication économique des systèmes HUD selon l'invention.

Les luminophores utilisés selon l'invention sont les luminophores classiquement utilisés dans les applications de luminescences et sont bien entendus choisis en fonction de la source d'excitation utilisée. Tous les luminophores existants peuvent être utilisés selon l'invention. En pratique et de manière plus générale, on choisira selon l'invention un luminophore qui ne présente pas la tendance à diffuser dans le matériau intercalaire. Cette diffusion provoque dans le temps un brouillement de l'image imprimée et le pictogramme devient flou, notamment aux températures plus élevées. Par exemple, les luminophores inorganiques peuvent être préférés plus particulièrement si la couche 10 est déposée sur l'intercalaire 3 de matière thermoformable (ou sur une face d'un des feuillets, si le feuillet 3 est constitué de plusieurs couches thermoformabies successives), pour éviter la migration du luminophore dans la matrice plastique.

Par exemple, les luminophores utilisables peuvent être de tout type connu pour répondre à une excitation UV (down conversion) ou alternativement à une excitation dans le domaine de l'IR (up conversion). De tels matériaux peuvent être par exemple choisis dans le domaine des luminophores inorganiques, par exemple du type oxydes, halogénures, chalcogénures, silicates, phosphates, borates, aluminates le plus souvent métalliques. Le plus souvent, pour l'obtention de la fluorescence, ces matériaux constituent des matrices dopées par un élément choisi dans le groupe des terres rares, par exemple dans le groupe Eu, Ce, Er, Pr, Tb, Tm, Dy) ou dans le groupe des métaux de transition, par exemple dans le groupe Mn, Cr, Ti, Ag, Cu, Zn. De tels produits sont par exemple déjà bien connus dans le domaine des lampes fluorescentes. Ces luminophores présentent en outre l'avantage d'être relativement peu cher et de présenter des rendements pouvant approcher voire atteindre les 100%.

Sans sortir du cadre de l'invention, des luminophores du type colorant laser peuvent être également utilisés selon l'invention ainsi que les polymères organiques. Selon l'invention, il est également possible de sélectionner les luminophores dans le groupe des semi-conducteurs nanométriques du type Il-VI ou encore III-V, couramment appelés boîtes quantiques (quantum dots) dans la technique.

Les molécules organométalliques peuvent également être utilisées comme luminophores selon l'invention. Ces molécules sont par exemple constituées d'un centre de la fluorescence constitué par au moins un atome métallique ou un atome de terre rare, entourés par et liés à des groupements organiques.

La source utilisée est par exemple une source UV classique telle que par exemple mais non limitativement du type LED. Selon un mode alternatif, une source UV laser peut également être utilisée, par exemple mais non limitativement du type laser à solide, diode laser à semi-conducteurs, lasers à gaz, lasers à colorant, laser à excimère. De manière générale toute source connue d'excitation UV peut être utilisée selon l'invention.

Parmi toutes ces sources, les LED sont cependant privilégiées en raison de leur faible coût, leur faible encombrement et leur facilité d'utilisation et d'installation. De préférence, on utilisera selon l'invention une lentille pour concentrer le rayonnement incident sur la couche de luminophore ou le pictogramme. Selon un mode avantageux de l'invention et contrairement aux dispositifs de vision HUD de l'art antérieur, la source d'excitation n'est de préférence pas assujettie à la mise en oeuvre d'un dispositif complexe de modulation et de direction du rayonnement d'excitation, tel qu'un système de rétroprojection du type DLP (Digital Light Processing Projector). En particulier, la source d'excitation est selon l'invention de préférence fixe et directement orientée vers le pictogramme, sans qu'il soit besoin de modifier son spectre d'émission. En particulier, la source d'excitation selon l'invention peut être constituée d'un faisceau ou d'un réseau de LED positionnés et cachés dans le tableau de bord, les montants latéraux du pare-brise ou encore dans le toit du véhicule. Les LED sont disposés selon les techniques de l'art au regard des positions du pare-brise incorporant le ou les pictogrammes à visualiser.

En outre, le positionnement selon l'invention de la couche de luminophore au niveau de la couche noir d'émail a également pour avantage d'améliorer sensiblement l'intensité, le contraste et la netteté de l'image. En vision diurne notamment, l'intensité du rayonnement visible réémis permet, au contraire des dispositifs HUD de l'art antérieur, une vision parfaite des pictogrammes par le conducteur, même dans des conditions de forte insolation 8 du pare-brise. Selon un autre avantage de la présente invention, la concentration des luminophores constituant le pictogramme peut être augmentée fortement sans craindre une augmentation du flou ou une diminution de la transmission lumineuse aux endroits où le luminophore est déposé.

Il faut bien noter également que la présente invention permet de surcroît de résoudre de façon simple, directe et économique le problème de la dangerosité des sources utilisées, notamment lorsque celles-ci délivrent un faisceau concentré d'UV (ou d'IR). Ainsi, la couche de revêtement noir 6 est nécessairement disposée selon l'invention derrière la couche de luminophores 10, dans le sens de propagation du rayonnement incident 7. Elle forme ainsi de façon avantageuse une couche absorbante des UV et permet d'éviter, de par sa construction, toute fuite dangereuse du rayonnement incident dans ou en dehors de l'habitacle du véhicule. Bien évidemment, on ne sortirait cependant pas du cadre de l'invention si d'autres couches supplémentaires, absorbantes du rayonnent incident, était présentes après la couche 10 de luminophore, selon le sens de propagation du rayonnement incident 7. Enfin, la couche de revêtement noir 6 permet de prévenir toute dégradation des luminophores contre les radiations extérieures 8 (UV, visible) et assure ainsi une durée de vie du système HUD selon l'invention conforme à celle du véhicule.

En outre, par la présence du fond noir 6 disposé immédiatement derrière la couche luminophore, l'affichage n'est pas visible de l'extérieur.

Selon une autre variante, il est également possible selon l'invention d'ajouter avant la couche de luminophore 10, par exemple sur une des faces de la feuille de verre 2, une couche d'un matériau connu comme antireflet pour la radiation excitatrice utilisée, notamment dans le but améliorer le contraste du pictogramme pré-imprimé. Selon une variante qui peut être complémentaire de la réalisation précédente, le pare-brise peut également être muni d'une couche réfléchissante de la lumière visible, disposée dans le pare-brise laminé entre la couche de luminophore et le fond noir, de préférence directement derrière la couche de luminophores, par exemple sur la face interne de la feuille 2, pour en augmenter la luminance voir le contraste.

Sans sortir du cadre de l'invention, des sources concentrées de lumière du type laser peuvent être utilisées lorsque la source d'excitation émet une radiation dans le domaine de l'infrarouge, c'est-à-dire dans le domaine de l'up-conversion.

Il est possible bien entendu possible selon l'invention d'utiliser un mélange de luminophores dans la couche 10, par exemple un luminophore émettant dans le rouge, un luminophore émettant dans le bleu et un luminophore émettant dans le vert, chacun de ces luminophores présentant une bande d'absorption, qui peut être différente et/ou distincte, permettant une excitation par le ou les rayonnements incidents. Au sein de la couche 10, les différents luminophores sont par exemple déposés précisément sur l'intercalaire 3, la feuille 2, de façon à former un pictogramme préimprimé multicolore. Selon une alternative possible, on mélange au sein de la couche de luminophores différents types de luminophores, pour obtenir la couleur désirée, qui peut aller jusqu'au blanc.

Selon une autre réalisation, certains LED peuvent être sélectionnés, positionnés et orientés pour exciter de façon sélective un type de luminophore et d'autres pour exciter sélectivement un autre type de luminophores sur un même pictogramme. Alternativement, un seul type de LED peut être utilisé pour exciter l'ensemble des luminophores constituant le pictogramme.

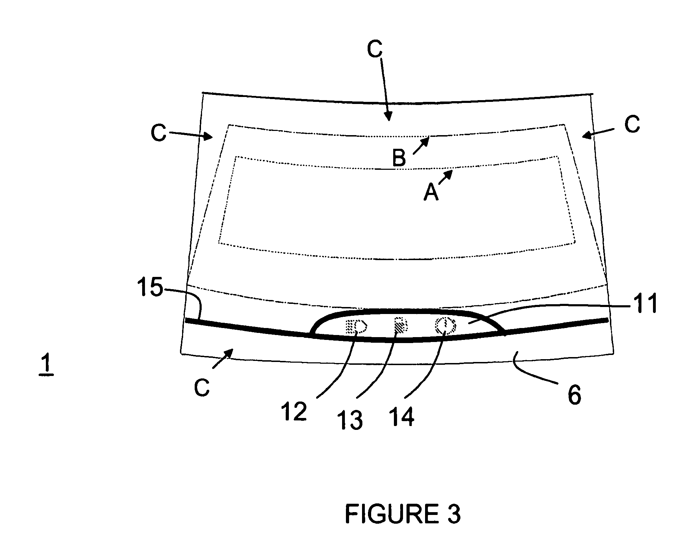

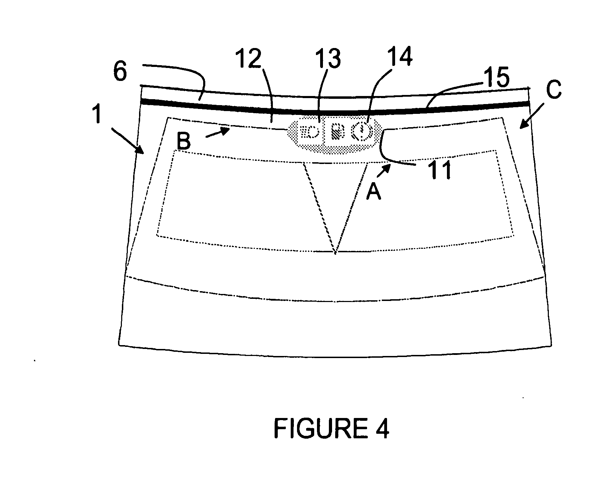

Sur la figure 3, on a représenté une vue de face et en élévation du pare-brise selon l'invention. Sur le pare-brise 1, on a représenté schématiquement les différentes zones de vision du conducteur selon la norme européenne ECE 43, annexe 18 : la zone A qui correspond à la zone de vision centrale du conducteur, la zone B qui correspond à une zone intermédiaire et une zone C périphérique de laquelle déborde, sur les pare-brises actuellement commercialisés, le fond noir 6 en émail, déposé typiquement par sérigraphie sur tout le pourtour du vitrage feuilleté. Pour des raisons de lisibilité sur les figures 3 et 4, on a représenté uniquement par un trait noir 15 la limite supérieure de la couche noir 6 sérigraphiée. Tel que représenté sur la figure 3, l'émail noir 6 est également déposé dans une zone supplémentaire 11 au niveau du bord inférieur du vitrage et en position centrale, par exemple jusqu'à la limite de la zone B. Des couches de luminophores 12, 13, 14 de même nature ou émettant une lumière visible de différentes couleurs sont également déposées par sérigraphie au niveau de la zone supplémentaire 11 de manière à former une suite de pictogrammes dans la partie inférieure du pare-brise. Associés à ces pictogrammes, des diodes électroluminescentes LED, cachées dans le tableau de bord, permettent d'afficher sélectivement l'un ou l'autre de ces pictogrammes en fonction des informations disponibles des besoins ou d'un danger imminent par exemple.

La figure 4 illustre une autre réalisation de l'invention, dans laquelle la zone supplémentaire de fond noir est disposée dans la partie haute du vitrage et se présente sous la forme d'une couche non continue, par exemple une zone sérigraphiée noire et dégradée.

A titre d'exemple et par référence à la réglementation européenne (norme ECE 43), il est possible de déposer un fond noir continu ou en dégradé dans toute la zone C, et même à certains endroits de la zone B, notamment à l'emplacement actuel du troisième pare-soleil, c'est-à-dire approximativement et tel que représenté sur la figure 4, entre le rétroviseur central intérieur et la bande supérieure du pare-brise. Selon la norme ECE 43, une telle zone est comprise surplombant la zone centrale du vitrage en forme de V telle que représentée sur la figure 4, étant bien entendu que la figure 4 est une simple représentation ne reflétant pas les proportions réelles de ladite zone.

De la même façon que pour l'exemple de réalisation précédent, des couches de luminophores 12, 13, 14 de même nature ou émettant une lumière visible de couleur différente sont également déposées par sérigraphie au niveau de la zone supplémentaire 11 de manière à former une suite de pictogrammes dans la partie supérieure du pare-brise. Dans ce mode de réalisation, le dispositif de génération de la lumière excitatrice, par exemple un réseau de LED, est placé très facilement au niveau du toit du véhicule, typiquement derrière le couvercle bombé de la lampe intérieure du véhicule.

## Revendications

1. Pare-brise feuilleté incorporant un dispositif de visualisation tête haute, comprenant un assemblage de deux feuilles transparentes de verre inorganique (2, 9), reliées entre elles par un intercalaire (3) d'une matière thermoformable ou par un feuillet multicouche intégrant un tel intercalaire, selon l'ordre suivant :
- une première feuille extérieure (9), dont une face est tournée vers l'extérieur du véhicule et l'autre face est au contact de l'intercalaire ou du feuillet multicouche (3), ladite autre face étant par ailleurs revêtue sur au moins un de ses bords d'une couche (6) d'émail noir servant de décoration ou de protection des couches adhésives utilisées pour le masquage des bandes collectrices de réseaux chauffants,
- une deuxième feuille intérieure (2), dont une face est au contact de l'intercalaire ou du feuillet multicouche (3) et l'autre face est tournée vers l'intérieur du véhicule (20),
ledit pare-brise étant **caractérisé en ce que** :
- il comporte au moins une couche (10), d'au moins un matériau luminophore choisi pour répondre à une onde incidente lumineuse incidente excitatrice (8) dans le domaine de l'ultraviolet ou de l'IR en réémettant un rayonnement lumineux dans le domaine du visible, ladite couche étant positionnée sur le pare-brise (1), suivant l'angle de vision du conducteur (5), au niveau de ladite couche (6) d'émail noir,
- il comporte au moins une couche (10), déposée sous la forme d'un pictogramme (12, 13, 14), d'au moins un matériau luminophore choisi pour répondre à une onde incidente lumineuse incidente excitatrice (8) dans le domaine de l'ultraviolet ou de l'IR en réémettant un rayonnement lumineux dans le domaine du visible, ledit pictogramme (12, 13, 14) étant positionné sur le pare-brise (1), suivant l'angle de vision du conducteur (5), au niveau de ladite couche (6) d'émail noir,
- ladite couche (10) de luminophore est disposée sur la face de l'intercalaire ou du feuillet thermoplastique tournée vers l'habitacle (20) du véhicule, sur la face interne de la deuxième feuille intérieure ou sur la face externe de la deuxième feuille intérieure, par référence à l'habitacle (20) du véhicule.

2. Pare-brise feuilleté selon la revendication 1, dans lequel ladite couche (10) de luminophore est disposée sur la face de l'intercalaire ou du feuillet thermoplastique tournée vers l'habitacle du véhicule (20).

3. Pare-brise feuilleté selon l'une des revendications précédentes, dans lequel la matière thermoformable constituant ledit intercalaire est choisie dans le groupe des PVB, des PVC plastifiés, du polyuréthane PU ou des éthylènes vinyle acétate EVA.

4. Pare-brise feuilleté selon l'une des revendications précédentes, dans lequel les feuilles transparentes sont reliées entre elles par un feuillet multicouche intégrant un intercalaire PVB, par exemple un feuillet comprenant une succession de couches PVB/PET/PVB, dans lequel PET est le polyéthylène téréphtalate.

5. Pare-brise feuilleté selon l'une des revendications précédentes, comprenant en outre une couche d'un matériau antireflet pour la radiation excitatrice utilisée, disposée dans l'assemblage avant la couche de luminophore (10), par exemple sur une des faces de la feuille de verre intérieur (2).

6. Pare-brise feuilleté selon l'une des revendications précédentes, comprenant en outre une couche d'un matériau réfléchissant la lumière visible disposée dans l'assemblage avant la couche de luminophore (10), par exemple sur la face interne de la feuille de verre intérieur (2).

7. Dispositif de visualisation d'une image sur un pare-brise feuilleté comprenant un pare-brise selon l'une des revendications précédentes et une source (4) génératrice d'un rayonnement dans le domaine de l'UV ou de l'IR, le faisceau du rayonnement étant dirigé vers la ou les zones (11) du vitrage comprenant le ou les pictogrammes (12, 13, 14).

8. Dispositif de visualisation selon la revendication 7, dans lequel la source génératrice de rayonnement UV classique est choisie parmi les sources du type diode électroluminescente LED, les sources UV laser, par exemple du type laser à solide, diode laser à semi-conducteurs, lasers à gaz, lasers à colorant, laser à excimère.

9. Dispositif de visualisation selon la revendication 8 dans lequel la source génératrice de rayonnement UV est constituée par un réseau de LED.

10. Dispositif de visualisation selon la revendication 9, comprenant en outre une lentille configurée et disposée pour concentrer le rayonnement UV incident sur la couche de luminophore ou le pictogramme.

11. Dispositif de visualisation selon l'une des revendications 7 à 10, dans lequel une diode électroluminescente est dédiée à la visualisation sur le pare-brise d'un pictogramme.

12. Dispositif de visualisation selon l'une des revendications 8 à 12, dans lequel au moins deux diodes électroluminescentes sont dédiées à la visualisation sur le pare-brise d'un pictogramme.

13. Dispositif de visualisation selon l'une des revendications 7 à 12, comprenant des moyens de modulation de la puissance de la source génératrice selon au moins deux configurations : une configuration pour la vision nocturne, dans laquelle la puissance de la source est ajustée pour que la luminance du pictogramme soit typiquement comprise entre environ 30 et environ 100 Cd/m² et une configuration pour la vision diurne, dans laquelle la puissance de la source est ajustée pour que la luminance du pictogramme soit typiquement comprise entre environ 200 et environ 2000 Cd/m².

## Patentansprüche

1. Verbundwindschutzscheibe, die eine Head-up-Display-Vorrichtung enthält, umfassend eine Anordnung aus zwei transparenten Scheiben aus anorganischem Glas (2, 9), die durch eine Zwischenschicht (3) aus einem thermoformbaren Material oder durch eine Mehrlagenschicht, die eine solche Zwischenschicht enthält, untereinander verbunden sind, in folgender Reihenfolge:
- eine erste äußere Scheibe (9), von der eine Seite der Außenseite des Fahrzeugs zugewandt ist und die andere Seite mit der Zwischenschicht oder der Mehrlagenschicht (3) in Kontakt ist, wobei die andere Seite außerdem an wenigstens einer ihrer Kanten mit einer Schicht (6) aus schwarzem Email überzogen ist, welche als Verzierung oder als Schutz der für das Verdecken der Sammelbänder von Heiznetzen verwendeten Haftschichten dient,
- eine zweite innere Scheibe (2), von der eine Seite mit der Zwischenschicht oder der Mehrlagenschicht (3) in Kontakt ist und die andere Seite der Innenseite des Fahrzeugs (20) zugewandt ist,
wobei die Windschutzscheibe **dadurch gekennzeichnet ist, dass**:
- sie wenigstens eine Schicht (10) aus wenigstens einem Luminophor umfasst, der ausgewählt ist, um auf eine einfallende, einfallend anregende Lichtwelle (8) im UV- oder IR-Bereich dadurch zu reagieren, dass er eine Lichtstrahlung im Bereich des Sichtbaren zurücksendet, wobei die Schicht auf der Windschutzscheibe (1) im Blickwinkel des Fahrers (5) im Bereich der Schicht (6) aus schwarzem Email angeordnet ist,
- sie wenigstens eine in Form eines Piktogramms (12, 13, 14) aufgebrachte Schicht (10) aus wenigstens einem Luminophor umfasst, der ausgewählt ist, um auf eine einfallende, einfallend anregende Lichtwelle (8) im UV- oder IR-Bereich dadurch zu reagieren, dass er eine Lichtstrahlung im Bereich des Sichtbaren zurücksendet, wobei das Piktogramm (12, 13, 14) auf der Windschutzscheibe (1) im Blickwinkel des Fahrers (5) im Bereich der Schicht (6) aus schwarzem Email positioniert ist,
- die Luminophorschicht (10) auf der Seite der Zwischenschicht oder der Thermoplastschicht, welche dem Fahrgastraum (20) des Fahrzeugs zugewandt ist, auf der Innenseite der zweiten inneren Scheibe oder auf der Außenseite der zweiten inneren Scheibe, unter Bezug auf den Fahrgastraum (20) des Fahrzeugs, angeordnet ist.

2. Verbundwindschutzscheibe nach Anspruch 1, wobei die Luminophorschicht (10) auf der Seite der Zwischenschicht oder der Thermoplastschicht, welche dem Fahrgastraum des Fahrzeugs (20) zugewandt ist, angeordnet ist.

3. Verbundwindschutzscheibe nach einem der vorstehenden Ansprüche, wobei das thermoformbare Material, welches die Zwischenschicht bildet, aus der Gruppe der PVB, der Weich-PVC, des Polyurethan PU oder der Ethylen-Vinylacetate EVA ausgewählt ist.

4. Verbundwindschutzscheibe nach einem der vorstehenden Ansprüche, wobei die transparenten Scheiben durch eine eine PVB-Zwischenschicht integrierende Mehrlagenschicht, beispielsweise eine Schicht, die eine PVB/PET/PVB-Lagenfolge umfasst, worin PET Polyethylenterephthalat ist, untereinander verbunden sind.

5. Verbundwindschutzscheibe nach einem der vorstehenden Ansprüche, ferner umfassend eine Schicht aus einem Antireflex-Material für die verwendete Anregungsstrahlung, welche in der Anordnung vor der Luminophorschicht (10), beispielsweise auf einer der Seiten der inneren Glasscheibe (2) angeordnet ist.

6. Verbundwindschutzscheibe nach einem der vorstehenden Ansprüche, ferner umfassend eine Schicht aus einem das sichtbare Licht reflektierenden Material, die in der Anordnung vor der Luminophorschicht (10), beispielsweise auf der Innenseite der inneren Glasscheibe (2) angeordnet ist.

7. Vorrichtung zum Anzeigen eines Bildes auf einer Verbundwindschutzscheibe, umfassend eine Windschutzscheibe nach einem der vorstehenden Ansprüche sowie eine Quelle (4) zum Erzeugen einer Strahlung im UV- oder IR-Bereich, wobei der Strahl der Strahlung in Richtung des oder der Bereiche (11) der Verglasung, welche das oder die Piktogramme (12, 13, 14) umfassen, gerichtet ist.

8. Anzeigevorrichtung nach Anspruch 7, wobei die herkömmliche UV-Strahlung erzeugende Quelle aus den Quellen vom Typ Leuchtdiode LED, Laser-UV-Quellen, zum Beispiel vom Typ Festkörperlaser, Halbleiterlaserdiode, Gaslaser, Farbstofflaser, Excimerlaser ausgewählt ist.

9. Anzeigevorrichtung nach Anspruch 8, wobei die UV-Strahlung erzeugende Quelle durch ein LED-Netz gebildet ist.

10. Anzeigevorrichtung nach Anspruch 9, ferner umfassend eine Linse, die dazu ausgebildet und angeordnet ist, die einfallende UV-Strahlung auf die Luminophorschicht oder das Piktogramm zu konzentrieren.

11. Anzeigevorrichtung nach einem der Ansprüche 7 bis 10, wobei eine Leuchtdiode speziell für die Anzeige eines Piktogramms auf der Windschutzscheibe bestimmt ist.

12. Anzeigevorrichtung nach einem der Ansprüche 8 bis 11, wobei wenigstens zwei Leuchtdioden speziell für die Anzeige eines Piktogramms auf der Windschutzscheibe bestimmt sind.

13. Anzeigevorrichtung nach einem der Ansprüche 7 bis 12, umfassend Mittel zum Modulieren der Leistung der erzeugenden Quelle entsprechend wenigstens zweier Ausführungen, nämlich einer Ausführung für die Nachtsicht, bei der die Leistung der Quelle eingestellt ist, damit die Leuchtdichte des Piktogramms typischerweise zwischen etwa 30 und etwa 100 Cd/m² liegt, und einer Ausführung für die Tagsicht, bei der die Leistung der Quelle eingestellt ist, damit die Leuchtdichte des Piktogramms typischerweise zwischen etwa 200 und etwa 2000 Cd/m² liegt.

## Claims

1. A laminated windshield incorporating a head up display device, comprising an assembly of two transparent inorganic glass sheets (2, 9) connected together by an insert (3) of a thermoformable material or by a multilayer leaf incorporating such an insert, in the following order:
- a first outer sheet (9), of which one face is turned towards the outside of the vehicle and the other face is in contact with the insert or multilayer leaf (3), said other face being in addition coated on at least one of its edges with a layer (6) of a black enamel having the function of decoration or of protecting adhesive layers used for masking the collecting strips of the heating systems,
- a second inner sheet (2), of which one face is in contact with the insert or the multilayer leaf (3) and the other face is turned towards the inside of the vehicle (20),
said windshield being **characterized in that**:
- it includes at least one layer (10) of at least one luminophore chosen to respond to an exciting incident light wave (8) in the ultraviolet or IR region by re-emitting light radiation in the visible region, and **in that** said layer being positioned on the windshield (1), at the angle of vision of the driver(5), in the region of the layer (6) of black enamel,
- it includes at least one layer (10) deposited in the form of a pictogram (12, 13, 14) of at least one luminophore chosen to respond to an exciting incident light wave (8) in the ultraviolet or IR region by re-emitting light radiation in the visible region, said pictogram being positioned on the windshield (1) at the angle of vision of the driver (5), in the region of the layer (6) of black enamel,
- said luminophore layer (10) is disposed on the face of the insert or of the thermoplastic leaf turned towards the passenger compartment (20) of the vehicle, on the inner face of the second inner sheet or on the outer face of the second inner sheet, with reference to the passenger compartment (20) of the vehicle.

2. The laminated windshield as claimed in claim 1, wherein said luminophore layer (10) is disposed on the face of the insert or of the thermoplastic leaf turned towards the passenger compartment of the vehicle (20).

3. The laminated windshield as claimed in one of the preceding claims, wherein the thermoformable material constituting said insert is chosen from the group of PVBs, plasticized PVCs, polyurethane PU, or ethylene vinyl acetates EVA.

4. The laminated windshield as claimed in one of the preceding claims, wherein the transparent sheets are connected together by a multilayer leaf incorporating a PVB insert, for example a leaf comprising a succession of PVB/PET/PVB layers, in which PET is polyethylene terephthalate.

5. The laminated windshield as claimed in one of the preceding claims, additionally including a layer of material that does not reflect the exciting radiation, disposed in the assembly before the luminophore layer (10), for example on one of the faces of the inner glass sheet (2).

6. The laminated windshield as claimed in one of the preceding claims, additionally including a layer of material reflecting visible light disposed in the assembly before the luminophore layer (10), for example on the inner face of the inner glass sheet (2).

7. A device for displaying an image on a laminated windshield comprising a windshield as claimed in one of the preceding claims and a source (4) generating radiation in the UV or IR region, the beam of the radiation being directed towards the zone or zones (11) of the glazing having the pictogram or pictograms (12, 13, 14).

8. The display device as claimed in claim 7, wherein the conventional source generating UV radiation may be chosen from sources of the electroluminescent diode type, LED, UV laser sources, for example of the solid laser type, a semiconductor diode laser, gas lasers, dye lasers, or an excimer laser.

9. The display device as claimed in claim 8, wherein the source generating UV radiation consists of an LED grid.

10. The display device as claimed in claim 9, additionally including a lens configured and disposed to concentrate the incident UV radiation on the luminophore layer or pictogram.

11. The display device as claimed in one of claims 7 to 10, wherein an electroluminescent diode is dedicated to displaying a pictogram on the windshield.

12. The display device as claimed in one of claims 8 to 11, wherein at least two electroluminescent diodes are dedicated to displaying a pictogram on the windshield.

13. The display device as claimed in one of claims 7 to 12, including means for modulating the power of the generating source according to at least two configurations: a configuration for night vision, in which the power of the source is adjusted so that the luminance of the pictogram lies typically between approximately 30 and approximately 100 Cd/m² and a configuration for daytime vision in which the power of the source is adjusted so that the luminance of the pictogram lies typically between approximately 200 and approximately 2000 Cd/m².
